# DEMANDE DE BREVET EUROPEEN

(11) **EP 0 877 277 A1**
(43) Date de publication de la demande: **11.11.1998**
(21) Numéro de dépôt: 98420078.2
(22) Date de dépôt: 06.05.1998
(51) Int. Cl.: G02C 5/18

(54) **Branche de monture de lunettes**

(30) Priorité: 07.05.1997 FR 9705877
(71) Demandeur: Salino et Fils S.A., 39400 Morez (FR)
(72) Inventeur: Millet, Gérard, 01100 Arbent (FR)
(74) Mandataire: Moinas, Michel

(57) **Abrégé**

Une branche de lunettes comporte une âme métallique sur laquelle est inséré un embout ou une gaine plastique (10). Le conduit inteme (12) de l'embout ou de la gaine présente au moins un tenon de serrage (22,24) radial orienté vers l'intérieur et d'un seul bloc avec l'embout ou la gaine. Le ou les tenons (22,24) sont agencés dans la partie (14) du conduit (12) proche ou dans la courbe (16) formant le crochet de rétention de la branche derrière l'oreille, et sont régulièrement espacés angulairement dans un plan transversal du conduit (12), par exemple quatre tenons agencés en croix.

## Description

La présente invention est relative à une branche de monture de lunettes comportant une âme métallique qui est soit recouverte par une gaine plastique pratiquement sur toute sa longueur, soit garnie d'un embout plastique seulement en son extrémité arrière courbe d'accrochage derrière l'oreille.

De telles branches sont appréciées du public car l'âme métallique permet de réaliser une branche à la fois esthétiquement fine et suffisamment rigide pour une bonne tenue de la monture sur le visage, alors que la gaine ou l'embout permet d'éviter un contact du métal avec la peau du porteur susceptible de provoquer une allergie et donne au crochet arrière de branche une forme compatible et confortable avec la morphologie en cet endroit de la tête.

Le document FR-A-2 655 162 décrit un procédé de réalisation d'une telle branche par moulage d'une première moitié longitudinale de la gaine ou de l'embout, puis installation de l'âme métallique dans la première moitié au sein du moule, puis surmoulage de la seconde moitié longitudinale se soudant à la première. Toutefois, ce procédé implique des difficultés de techniques de moulage. De plus, on ne peut pas entièrement exclure la formation de deux lignes longitudinales opposées de surplus de matière plastique disgracieux correspondant au plan de jointure.

De manière plus classique, la gaine ou l'embout est fraisé à partir d'un bloc de plastique, notamment d'acétate, puis percé ; ou est moulé d'un seul tenant avec formation d'un conduit interne. Parallèlement l'âme métallique est fabriquée par martelage ou rétreint d'une tige métallique. La gaine ou l'embout est ensuite installé à plat dans un support de montage et l'âme est insérée en force dans le conduit inteme de la gaine ou de l'embout au moyen d'un vérin pneumatique solidaire du support. Le diamètre interne du conduit interne étant initialement légèrement plus petit que le diamètre exteme de la tige, l'élargissement de ce conduit crée des forces élastiques de serrage qui, en combinaison avec les forces de friction réparties sur toute la surface cylindrique de contact, maintiennent en place cette gaine ou cet embout sur la branche. Si désiré, une goutte de colle peut être déposée dans l'embouchure du conduit interne pour confirmer la liaison ultérieure entre le métal et le plastique.

Toutefois, il existe un risque d'évolution dans le temps du matériau plastique composant la gaine ou l'embout faisant que les forces de serrage peuvent diminuer, voire disparaître, diminuant d'autant les forces de friction. Cet embout ou cette gaine peut alors flotter sur l'âme, voire se séparer de la branche.

Le but de la présente invention est une branche de lunettes comportant une âme métallique sur laquelle est inséré un embout ou une gaine plastique présentant une meilleure fiabilité de tenue dans le temps tout en conservant l'aspect fin et élégant faisant sa caractéristique.

Les parties constitutives de la branche doivent toutefois rester de structure aussi simple que possible et être faciles à assembler afin de maintenir aussi bas que possible les coûts de fabrication, notamment par une fabrication en masse.

Ces buts sont atteints du fait que le conduit interne de l'embout ou de la gaine présente au moins un tenon de serrage radial orienté vers l'intérieur et d'un seul bloc avec l'embout ou la gaine.

Certes on connaît des documents EP-A-435 121 ou DE-A-30 47 263 des branches télescopiques de lunettes dont la première partie avant tubulaire de section transversale non circulaire et solidaire de la charnière de monture de lunettes reçoit une seconde partie arrière se terminant par le crochet. Un dispositif de verrouillage de la première partie comprend à l'intérieur du conduit inteme tubulaire une lame élastique portant en son extrémité un ou plusieurs tenons orientés vers l'intérieur, c'est-à-dire vers l'axe longitudinal central, et venant s'engager dans l'une des encoches ménagées sur la périphérie de l'extrémité frontale de la partie arrière. Ces dispositifs, essentiellement conçus pour permettre le réglage de la longueur de la branche, sont toutefois particulièrement complexes et impliquent une hauteur ou une épaisseur de branche conséquente et indésirée.

Par ailleurs, le document DE-A-38 16 481 divulgue une branche de lunettes dont la tige métallique présente une section transversale plate verticale avec les bords inférieur et supérieur triangulaires. Ces tranches supérieure et inférieure présentent des cannelures sur lesquelles vient s'accrocher le conduit interne souple d'un manchon de section transversale ovale pour présenter une meilleure flexibilité dans le sens vertical que horizontal. Cette branche est donc également complexe dans la mesure où non seulement on doit réaliser une tige plate à bords triangulaires dans lesquels on doit par la suite usiner les cannelures, mais il convient de mouler un embout en deux couches superposées et de surcroît en section ovale.

A l'inverse, la branche selon l'invention se distingue du fait que l'on profite de l'opération de moulage pour créer plus simplement une restriction flexible inteme du conduit d'un seul tenant avec l'embout ou la gaine. Il n'est alors nullement impératif de retravailler la tige formant l'âme de la branche.

Des essais en atelier ont montré que, grâce à cette restriction flexible de conduit inteme d'embout, on améliore sensiblement la tenue de la branche. Entre autres, la force de traction d'arrachage de l'embout passe à 5 kgf en comparaison avec la force de 1 kgf antérieure.

Selon un mode de réalisation préféré, le ou les tenons sont agencés dans la partie du conduit proche ou dans la courbe formant le crochet de rétention de la branche derrière l'oreille.

La partie arrière de l'embout ou de la gaine étant usuellement plus épaisse à ce niveau, un léger renflement dû à la présence des tenons appuyant sur la tige passe pratiquement inaperçu.

De préférence, le conduit interne présente une pluralité de tenons régulièrement espacés angulairement dans un plan transversal du conduit, par exemple quatre tenons agencés en croix.

Chaque tenon peut alors être d'autant plus mince, ce qui permet de mieux répartir le travail d'élasticité et l'éventuel renflement dû à la déformation sur toute la périphérie transversale de l'embout ou de la gaine.

Avantageusement, la forme d'un tenon est donnée par l'intersection orthogonale d'un cylindre de diamètre 60 à 100 fois plus grand, de préférence 80 fois plus grand, que celui de la tige cylindrique formant l'âme métallique de la branche, ce cylindre pénétrant dans le côté du conduit selon une hauteur comprise entre 1/10ème et 1/20ème du diamètre de la tige. Par exemple, pour une tige de diamètre de 1,5 mm, la hauteur (ou profondeur) du tenon est comprise entre 0,08 mm et 0,12 mm, de préférence 0,10 mm, et sa section transversale dans le plan radial passant par l'axe longitudinal de la tige est en arc de cercle de rayon égal à environ 62 mm. Pour une tige de diamètre de 1,1 mm, on peut réduire la hauteur du tenon jusqu'à 0,06 mm.

Le tenon ainsi défini présente deux pentes arrière et avant très douces facilitant l'enfilage de l'embout ou de la gaine sur la tige. De plus, la réalisation d'un tel tenon n'implique qu'une légère modification de l'aiguille insérée dans le moule pour créer le conduit interne, à savoir un fraisage peu profond avec la tranche périphérique de coupe d'une large fraise circulaire dont l'axe de rotation est perpendiculaire à la tige et pénétrant dans cette tige orthogonalement.

Lorsque deux paires de tenons opposés sont agencées en croix, l'une des paires de tenons peut être plus haute que l'autre.

Par exemple, pour une branche dont la partie arrière est arquée vers le bas dans un plan sensiblement vertical tel que vu lorsque la monture de lunettes est portée, et comportant une âme métallique sous la forme d'une tige de diamètre de 1,5 mm, la paire de tenons dans le plan vertical peut présenter une hauteur radiale interne de 0,10 mm, l'autre paire transversale, donc dans le plan horizontal, peut présenter une hauteur de 0,12 mm. Ceci permet de tenir compte des différences d'épaisseurs de l'embout ou de la gaine dans cette partie arquée : l'épaisseur plus faible dans le plan horizontal, donc plus élastique, recevant le tenon le plus proéminent.

Si désiré, on ménage dans l'âme métallique de la branche des encoches de position, de formes et de dimensions correspondant à celles des tenons du conduit inteme de l'embout ou de la gaine. Au prix d'un léger usinage complémentaire de la tige métallique constituant l'âme de la branche, on augmente l'accrochage de l'embout ou de la gaine sur cette âme en supprimant tout risque de renflement externe.

Selon un procédé de réalisation avantageux d'un embout ou d'une gaine selon l'invention,
on injecte dans une empreinte d'embout ou de gaine formée entre deux blocs de moulage une première quantité de matière plastique,
on avance dans cette première quantité de matière plastique contenue dans l'empreinte une aiguille de moule dont la périphérie présente des fraisages réalisés orthogonalement avec une fraise circulaire,
on injecte la quantité résiduelle de matière plastique nécessaire pour réaliser l'embout ou la gaine,
on laisse refroidir et se solidifier l'embout ou la gaine, et
on retire l'aiguille de moule, les blocs étant soit maintenus fermés soit déjà ouverts.

Ainsi, on s'assure que lorsque l'aiguille est avancée, la matière plastique est suffisamment chaude et malléable pour correctement prendre la forme désirée des tenons.

L'invention sera mieux comprise à l'étude d'un mode de réalisation pris à titre nullement limitatif et illustré dans les figures annexées dans lesquelles :
- la figure 1 est une vue en coupe agrandie de l'extrémité arrière d'une gaine ou d'un embout selon l'invention, et
- les figures 2A et 2B sont respectivement des vues de dessus et de côté de l'extrémité de l'aiguille de moulage prévue pour la réalisation de la gaine ou de l'embout de la figure 1, ces vues correspondant également à celles de l'extrémité d'une âme métallique modifiée de branche de lunettes selon l'invention.

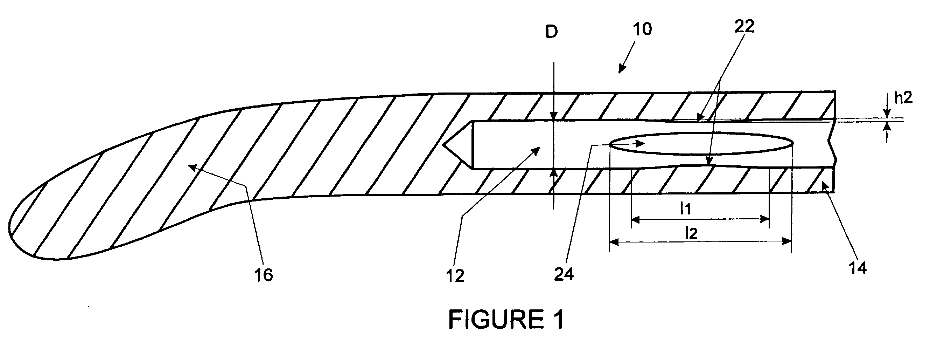

Sur la figure 1 est illustrée la portion arrière d'une gaine ou d'un embout plastique 10 prévu pour être emmanché sur une tige métallique formant l'âme d'une branche de lunettes. A ce titre, cet embout ou gaine 10 présente une partie avant tubulaire 14 et une partie arrière pleine courbée 16.

La partie avant 14 est usuellement de section transversale en forme de couronne, la section du conduit interne 12 étant circulaire. Par exemple, le diamètre inteme D de ce conduit inteme 12 est de l'ordre de 1,5 mm alors que le diamètre externe de la partie 14 est de l'ordre de 3 à 4 mm.

La partie arrière 16, c'est-à-dire celle commençant à partir de l'extrémité du conduit interne borgne 12, se présente sous la forme d'une spatule courbe, c'est-à-dire qu'elle présente une section transversale plutôt ovale avec un plus petit diamètre dans le plan horizontal (c'est-à-dire dans le plan perpendiculaire de la figure 1) de l'ordre de 3 mm et un plus grand diamètre dans le plan vertical (c'est-à-dire dans le plan de la figure 1) compris entre 5 et 6 mm.

Tel qu'illustré, cet embout ou gaine est moulé par injection d'un matériau thermoplastique tel que acétate ou propionate.

Plus particulièrement selon l'invention, le conduit interne 12 présente une paire de tenons 22 située en vis-à-vis dans le plan vertical et, au même niveau au sein du conduit inteme, une seconde paire de tenons horizontaux 24 située en vis-à-vis dans le plan horizontal. Ces tenons radiaux sont orientés vers l'axe central longitudinal du conduit interne 12, et sont donc disposés en croix dans un même plan transversal du conduit 12.

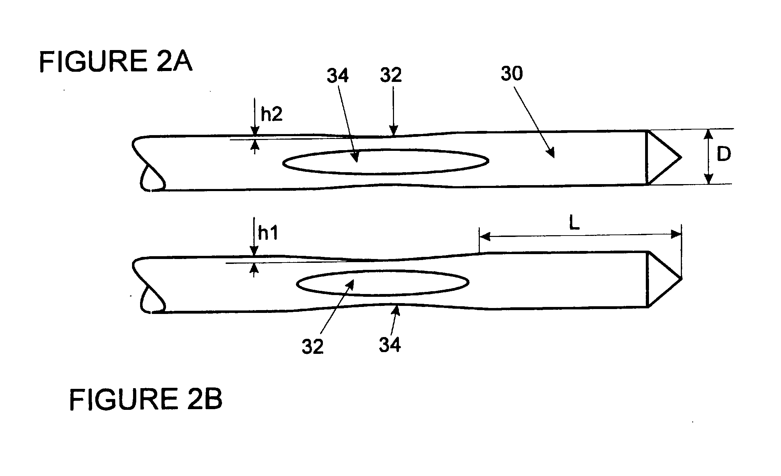

Les figures 2A et 2B illustrent une aiguille prévue pour être insérée dans l'empreinte du moule de l'embout ou de la gaine 10 pour former le conduit inteme borgne 12. Plus particulièrement selon l'invention, cette aiguille 30 présente, à une distance L relativement proche de son extrémité, par exemple de l'ordre de 7 mm, deux paires d'encoches diamétralement opposées 32 et 34 respectivement agencées dans deux plans perpendiculaires, à savoir les plans vertical et horizontal du futur embout.

Comme mieux visible sur les figures 2, ces encoches sont réalisées par fraisage au moyen de la tranche périphérique cylindrique de coupe d'une fraise circulaire dont l'axe de rotation est perpendiculaire à l'aiguille, dont le plan circulaire transversal médian passe par l'axe longitudinal médian de l'aiguille, et avançant dans ce plan orthogonalement dans l'aiguille. Le rayon de cette fraise circulaire est relativement large par rapport au diamètre de l'aiguille 30, en l'occurrence de l'ordre de 62 mm, mais ne pénètre que faiblement dans cette aiguille, respectivement selon une profondeur h₂ de l'ordre de 0,10 mm pour les encoches 32 et selon une profondeur h₁ de l'ordre de 0,12 mm pour les encoches plus larges 34. Le volume de ces encoches est donc défini par l'intersection sur une faible profondeur d'un premier cylindre constitué par l'aiguille 30 et d'un second cylindre orthogonal constitué par la tranche de coupe de la fraise.

Comme mieux visible sur la figure 1, ces tenons présentent donc une base de forme ovale allongée de longueur l₁ de l'ordre de 6 mm pour les tenons 22 et de longueur l₂ de l'ordre de 7,4 mm pour les tenons 24. La coupe transversale de ces tenons selon un plan radial passant par l'axe longitudinal du conduit interne se présente alors en forme d'arc de cercle de très grand rayon et de faible hauteur, respectivement h₁ de l'ordre de 0,12 mm et h₂ de l'ordre de 0,10 mm, formant donc deux rampes avant et arrière très douces.

Ces tenons forment ainsi une restriction en croix plus importante dans le plan horizontal que vertical. Lorsque l'âme métallique de la branche est insérée en force dans le conduit inteme 12, les parois en correspondance des tenons de la partie avant 14 tubulaire sont amenées à se déformer élastiquement sous un léger renflement créant une force de pincement local de serrage plus importante. La distance comprise entre ces tenons et l'extrémité du conduit interne borgne 12 constitue une réserve d'âme métallique en cas de léger glissement ultérieur.

Si désiré, l'extrémité de la tige formant l'âme métallique de la branche peut elle-même prendre une forme identique à celle de l'aiguille 30 illustrée sur les figures 2 en ce qu'on lui ménage également des encoches en correspondance avec les tenons intemes de l'embout ou de la gaine. Ces encoches peuvent être rapidement effectuées par martelage ou autres outils du type "pinces à sertir". Alors, les tenons internes de l'embout ou de la gaine fonctionnent plutôt à la manière de crochets pénétrant dans des encoches, ce qui évite tout risque de renflement inesthétique de l'embout ou de la gaine.

L'invention n'est pas strictement limitée à l'exemple de réalisation illustré mais englobe de nombreuses variantes et améliorations.

Par exemple, les paires de tenons horizontaux et verticaux peuvent ne pas être situées aux mêmes endroits au sein du conduit interne 12, mais être décalées longitudinalement. On peut également envisager une série de paires de tenons verticaux imbriquée dans une autre série de paires de tenons horizontaux décalés.

Par ailleurs, on peut également envisager de créer sur l'âme métallique des encoches non plus adoucies mais à bords avant et arrière à angle droit, et ceci par fraisage au moyen d'une fraise circulaire dont l'axe de rotation est alors parallèle à l'axe longitudinal de la tige, au lieu de lui être perpendiculaire comme auparavant. Le plan transversal médian circulaire de la fraise étant alors perpendiculaire à l'âme métallique, les encoches prennent la forme de la section transversale du bord de coupe de cette fraise, notamment rectangulaire. Les bords avant et arrière en forme de ressauts de telles encoches accrochent alors les tenons intemes de l'embout de manière pratiquement définitive.

## Revendications

1. Branche de lunettes comportant une âme métallique sur laquelle est inséré un embout ou une gaine plastique (10), caractérisée en ce que le conduit interne (12) de l'embout ou de la gaine présente au moins un tenon de serrage (22,24) radial orienté vers l'intérieur et d'un seul bloc avec l'embout ou la gaine.

2. Branche selon la revendication 1, caractérisée en ce que le ou les tenons (22,24) sont agencés dans la partie (14) du conduit (12) proche ou dans la courbe (16) formant le crochet de rétention de la branche derrière l'oreille.

3. Branche selon les revendications 1 ou 2, caractérisée en ce que le conduit inteme (12) présente une pluralité de tenons (22, 24) régulièrement espacés angulairement dans un plan transversal du conduit (12), par exemple quatre tenons agencés en croix.

4. Branche selon l'une des revendications précédentes, caractérisée en ce que la forme d'un tenon (22, 24) est donnée par l'intersection orthogonale d'un cylindre de diamètre 60 à 100 fois plus grand, de préférence 80 fois plus grand que celui d'une tige cylindrique (30) formant l'âme métallique de la branche, ce cylindre pénétrant dans le côté du conduit interne (12) selon une hauteur comprise entre 1/10ème et 1/20ème du diamètre de la tige.

5. Branche selon la revendication 2, caractérisée en ce que deux paires de tenons opposés sont agencées en croix, et en ce que l'une des paires de tenons (24) est plus haute que l'autre (22).

6. Branche selon l'une des revendications précédentes, caractérisée en ce que l'on ménage dans l'âme métallique de la branche des encoches de position, de formes et de dimensions correspondant à celles des tenons du conduit inteme de l'embout.

7. Procédé de réalisation d'un embout ou d'une gaine selon l'une des revendications précédentes, caractérisé en ce que
• on injecte dans une empreinte d'embout ou de gaine formée entre deux blocs de moulage une première quantité de matière plastique,
• on avance dans cette première quantité de matière plastique contenue dans l'empreinte une aiguille (30) de moule dont la périphérie présente des fraisages (32, 34) réalisés orthogonalement avec une fraise circulaire,
• on injecte la quantité résiduelle de màtière plastique nécessaire pour réaliser l'embout ou la gaine,
• on laisse refroidir et se solidifier l'embout ou la gaine, et on retire l'aiguille de moule, les blocs étant soit maintenus fermés, soit déjà ouverts.
